# EUROPÄISCHE PATENTSCHRIFT

(11) **EP 3 395 493 B1**
(45) Veröffentlichungstag und Bekanntmachung des Hinweises auf die Patenterteilung: **27.01.2021**
(21) Anmeldenummer: 18168899.5
(22) Anmeldetag: 24.04.2018
(51) Int. Cl.: B23K 26/262, B23K 26/08, B23K 26/082, B23K 26/26

(54) **VERFAHREN ZUM ZUSATZWERKSTOFF-FREIEN LASERSTRAHLVERSCHWEISSEN**
METHODS OF LASER BEAM WELDING WITHOUT FILLER-MATERIAL
PROCÉDÉS DE SOUDAGE PAR LASER SANS APPORT DE MATÉRIAU SUPPLÉMENTAIRE

(30) Priorität: 24.04.2017 DE 102017108681
(43) Veröffentlichungstag der Anmeldung: 31.10.2018
(73) Patentinhaber: Scherdel Innotec Forschungs- Und Entwicklungs GmbH, 95615 Marktredwitz (DE)
(72) Erfinder: WEIGANG, Manuel, 08525 Plauen (DE); KRASS, Michael, Marktredwitz (DE); DIETRICH, Swen, Treuen (DE); ZAPF, Tobias, 95659 Arzberg (DE); PLANNER, Theodor, 95698 Neualbenreuth (DE)
(74) Vertreter: Schmitt-Nilson Schraud Waibel Wohlfrom Patentanwälte Partnerschaft mbB

(56) Entgegenhaltungen:
- EP-A1- 1 543 914
- DE-A1-102012 008 940
- JP-A- S58 224 261
- US-A1- 2003 234 241

## Beschreibung

Die vorliegende Erfindung betrifft ein Verfahren zum Zusatzwerkstoff-freien Laserstrahlverschweißen eines metallischen Rohrelements mit einem metallischen Halteelement, und ein Verfahren zum Zusatzwerkstoff-freien Laserstrahlverschweißen eines ersten metallischen Rohrelements mit einem zweiten metallischen Rohrelement gemäß dem Oberbegriff der Ansprüche 1 und 4 (siehe z.B. US 2003/234241 A1).

Bei metallischen Rohrelementen ist es häufig erforderlich, diese mit einem Halter zu verbinden und das Rohr somit über einen solchen Halter zu halten oder abzustützen.

Solche Halter werden derzeit häufig mittels eines Lötprozesses, für den ein Flussmittel zum Auflösen der Oxidschicht erforderlich ist, an das Rohr angefügt. Dabei sind die erforderlichen großen Anbindungsflächen zwischen Halter und Rohrelement nachteilig. Des Weiteren ist der Lötprozess aufwändig.

Aus der EP 1 543 914 A1 ist ein Laserschweißverfahren bekannt, das ein Überlapp-Verschweißen zwischen einem als Rohr ausgebildeten Mutterelement und einem Halteelement erlaubt, die einander überlappen. Das Halteelement weist einen Flansch auf, der an der Außenfläche des Mutterelements anliegt und der mittels einer im Wesentlichen C-förmigen Schweißnaht, die durch einen im Wesentlichen in Axialrichtung auftreffenden Laserstrahl erzeugt wird, mit dem Mutterelement verbunden wird.

Es ist daher eine Aufgabe der vorliegenden Erfindung, Verfahren zum Verbinden eines metallischen Rohrelements mit einem metallischen Halteelement sowie zum Verbinden eines ersten mit einem zweiten metallischen Rohrelement anzugeben, die einfach durchführbar sind, nur eine geringe Anbindungsfläche benötigen und dennoch eine feste und integrale Verbindung zwischen Rohr- und Halteelement bzw. zwischen beiden Rohrelementen gewährleisten.

Diese Aufgaben werden durch den Gegenstand der unabhängigen Patentansprüche
1 und 4 gelöst.

Vorteilhafte Weiterbildungen ergeben sich aus den abhängigen Ansprüchen.

Ein erstes erfindungsgemäßes Verfahren zum Zusatzwerkstoff-freien Laserstrahl-Verschweißen eines metallischen Rohrelements mit einem metallischen Halteelement umfasst die folgenden Verfahrensschritte:
Bereitstellen eines Rohrelements und Bereitstellen eines Halteelements für das Rohrelement so, dass das Halteelement mit einer Anliegeseite an einem Außen-Umfangsbereich des Rohrelements anliegt, sodass der Verbindungsbereich zwischen Halteelement und Rohrelement von dem anliegeseitigen Endbereich des Halteelements und dem Außen-Umfangsbereich des Rohrelements an der Anliegeseite gebildet wird;
Zusatzwerkstoff-freies Verschweißen des Halteelements mit dem Rohrelement unter Betreiben einer Laserstrahlquelle derart,
   dass der Laserstrahl auf eine Auftreff-Fläche von 700 - 8000 µm², insbesondere 2000 - 3000 µm² auf den Verbindungsbereich zwischen Rohrelement und Halteelement auftrifft; und
   dass eine Relativbewegung des Laserstrahls über einen Großteil der gesamten Breite des Verbindungsbereich erfolgt und dabei der Laserstrahl mittels einer zweidimensionalen Oszillationsbewegung mit einer Streckenenergie von 20 - 100 J/mm über die zum Fügen aufzuschmelzende Zone geführt wird;
   wobei das Halteelement in einem Stumpfstoß an dem Außen-Umfangsbereich des Rohrelements anliegt, insbesondere an einem Umfangswinkelbereich von 0,5 bis 10° an dem Außen-Umfangsbereich de Rohrelements; und
   wobei der fokussierte Laserstrahl seitlich von einer Seite auf den Verbindungsbereich zwischen dem Halteelement und dem Rohrelement auftrifft, insbesondere aus einer Tangentialrichtung des Rohrelements an dem Verbindungsbereich.

Ein zweites erfindungsgemäßes Verfahren zum Zusatzwerkstoff-freien Laserstrahl-Verschweißen eines ersten metallischen Rohrelements mit einem zweiten metallischen Rohrelement umfasst die folgenden Verfahrensschritte:
Bereitstellen eines ersten metallischen Rohrelements und Bereitstellen eines zweiten metallischen Rohrelements so, dass das erste Rohrelement mit einer Anliegeseite an einer Anliegeseite des zweiten Rohrelements anliegt, sodass der Verbindungsbereich zwischen dem ersten und dem zweiten Rohrelement von den Anliegeseiten der beiden Rohrelemente gebildet wird;
Zusatzwerkstoff-freies Verschweißen des ersten Rohrelements mit dem zweiten Rohrelement unter Betreiben einer Laserstrahlquelle derart,
   dass der Laserstrahl auf eine Auftreff-Fläche von 700 - 8000 µm², insbesondere 2000 - 3000 µm² auf den Verbindungsbereich zwischen den beiden Rohrelementen auftrifft; und
   dass eine Relativbewegung des Laserstrahls über einen Großteil der gesamten Breite des Verbindungsbereich erfolgt und dabei der Laserstrahl mittels einer zweidimensionalen Oszillationsbewegung mit einer Streckenenergie von 20 - 100 J/mm über die zum Fügen aufzuschmelzende Zone geführt wird; und
wobei der fokussierte Laserstrahl seitlich von einer Seite auf den Verbindungsbereich zwischen dem ersten und dem zweiten Rohrelement auftrifft, insbesondere aus einer Tangentialrichtung der beiden Rohrelemente an dem Verbindungsbereich.

Gemäß einem ersten erfindungsgemäßen Grundgedanken kommt bei beiden erfindungsgemäßen Verfahren kein Zusatzwerkstoff, außer dem Rohrelement und dem Halteelement selbst bzw. den beiden Rohrelementen selbst, zum Einsatz und somit kann auf die Zuführung eines Zusatzwerkstoffes, wie es bei Verfahren des Hartlötens, des Weichlötens, des Ofenlötens und des Schmelz-Schweißverfahrens häufig erforderlich ist, verzichtet werden. Dadurch wird die Wärmeeinbringung verringert, da kein Zusatzwerkstoff geschmolzen werden muss. Die Durchführung des Verfahrens wird vereinfacht. Zudem werden die Fertigungskosten reduziert, da die Kosten für den Zusatzwerkstoff und dessen Zuführung entfallen.

Gemäß einem weiteren Grundgedanken der vorliegenden Erfindung wird beim Zusatzwerkstoff-freien Verschweißen die Laserstrahlquelle derart betrieben, dass der Laserstrahl mit einer sehr geringen Auftrefffläche bzw. sehr kleinen Fokusbereich von 700 - 8000 µm², insbesondere 2000 - 3000 µm², auf den Verbindungsbereich zwischen Rohrelement und Halteelement bzw. zwischen den beiden Rohrelementen auftrifft, und dass eine Relativbewegung des Laserstrahls über einen Großteil der gesamten Breite des Verbindungsbereich erfolgt und dabei der Laserstrahl mittels einer zweidimensionalen Oszillationsbewegung mit einer Streckenenergie von 20 - 100 J/mm über die zum Fügen aufzuschmelzende Zone geführt wird. Dabei kann die Oszillationsbewegung des Laserstrahls mit einer Oszillationsamplitude von Halteelement zu Rohrelement hin und wieder zurück erfolgen.

Mit einer solchen Streckenenergie wird bei einem Zusatzwerkstoff-freien Laserstrahl-Verschweißen eines metallischen Rohrelements mit einem metallischen Halteelement erreicht, dass der Werkstoff im Verbindungsbereich zwischen Halteelement und Rohrelement über die gesamte Dicke angeschmolzen wird, dass sich diese aufgeschmolzene Zone jedoch nicht bis zum Innenradius des Rohrelements erstreckt. Bei einem Zusatzwerkstoff-freien Laserstrahl-Verschweißen eines ersten metallischen Rohrelements mit einem zweiten metallischen Rohrelement wird erreicht, dass der Werkstoff im Verbindungsbereich zwischen den beiden Rohrelementen über die gesamte Dicke angeschmolzen wird, dass sich diese aufgeschmolzene Zone jedoch nicht bis zum Innenradius der Rohrelemente erstreckt. Die Anbindungstiefe kann dabei das 0,5 bis 3-fache der Rohrwanddicke betragen. Unter Streckenenergie wird dabei das Produkt aus Laserstrahlleistung und Schweißgeschwindigkeit verstanden. Mit anderen Worten entspricht die Einschweißtiefe der Dicke des Halteelements, Die Oszillationsbewegung des Laserstrahls kann auch als Strahlpendeln oder als Wobbeln bezeichnet werden.

Die Kombination aus geringer Auftrefffläche, Oszillationsbewegung und Streckenenergie in dem beanspruchten Bereich ermöglicht somit eine integrale Verbindung zwischen Rohr- und Halteelement bzw. zwischen beiden Halteelementen auch bei gering bemessenen Verbindungsbereichen.

Durch das erfindungsgemäße Zusatzwerkstoff-freie Verschweißen kann die Schweißnahtgeometrie exakt an die miteinander zu verschweißenden Elemente (Rohrelement-Halteelement bzw. zwei Rohrelemente) unter Berücksichtigung von Materialabmessung und ggf. vorhandenem Fügespalt abgestimmt werden. Durch das erfindungsgemäße Zusatzwerkstoff-freie Verschweißen kann auch der Freiheitsgrad bei der Zugänglichkeit des Verbindungsbereichs verbessert werden, da auf die Zuführung des Zusatzwerkstoffs verzichtet werden kann.

Des Weiteren kann durch die Oszillationsbewegung des Laserstrahls die Schweißnahtgeometrie an die jeweiligen Erfordernisse des Verbindungsbereichs zwischen Halteelement und Rohrelement bzw. zwischen den beiden Rohrelementen individuell angepasst werden.

Zudem können die Abmessungen des Halteelements bzw. des Verbindungsbereichs zwischen den beiden Rohrelementen reduziert werden. Erfindungsgemäß reichen bereits geringe Anbindungsflächen zwischen Rohrelement und Halteelement bzw. zwischen zwei Rohrelementen aus, um die beiden Elemente fest und dauerhaft miteinander zu verbinden und die geforderten Festigkeiten zu erreichen.

Die Energieeinbringung in den Werkstoff des Rohrelements und des Halteelements bzw. in die beiden Rohrelemente erfolgt nur an der schmalen Schweißnaht und ist erheblich geringer als beim Löten, was zu einer geringeren thermischen Schädigung und Festigkeitsabnahme des Werkstoffs führt. Konstruktiv ermöglicht dies ebenfalls eine Gewichtseinsparung.

Es tritt keine Anschmelzung des Rohrbereiches bzw. der Rohrbereiche am Innenradius auf, und Undichtigkeiten können zuverlässig vermieden werden. Die Qualität der Schweißnahtverbindung ist sehr hoch.

Durch die Oszillationsbewegung des Laserstrahls kann die Bildung von Poren, die sich nachteilig auf die Belastbarkeit der Schweißnaht und somit der Fügestelle auswirken, reduziert oder ganz vermieden werden. Die Heißriss- und Erstarrungsrissbindung kann positiv beeinflusst, insbesondere auf ein Minimum reduziert werden.

Des Weiteren können Spalte, in denen sich korrosive Medien durch Kapillareffekt anreichern können, erfindungsgemäß vermieden werden.

Die erfindungsgemäßen Verfahren ermöglichen eine exakte Steuerung der Bewegung des Laserstrahls, von dessen Auftrefffläche und von der Laserleistung, um eine optimierte Temperaturverteilung in dem Verbindungsbereich zu gewährleisten.

Gegenüber üblichen Lötverfahren zeichnet sich das erfindungsgemäße Zusatzwerkstoff-freie Verschweißen durch eine deutlich reduzierte Wärmeeinbringung in den Verbindungsbereich zwischen Rohrelement und Halteelement bzw. zwischen den beiden Rohrelementen aus, was einen Verzug und eine thermische Festigkeitsabnahme reduziert. Des Weiteren kann das Abreinigen von beim Löten üblichen Flussmittelrückständen völlig entfallen.

Durch die Einsparung eines Flussmittels sind die erfindungsgemäßen Verfahren auch sehr umweltfreundlich. Die Gefahr von Korrosion durch nicht abgereinigte Flussmittelrückstände, die bei konventionellen Verfahren mit Flussmitteln häufig gegeben ist, existiert bei den erfindungsgemäßen Verfahren nicht.

Die durch das erfindungsgemäße Zusatzwerkstoff-freie Verschweißen gebildete Schweißnaht besitzt eine mindestens gleichhohe Festigkeit als eine herkömmliche Lötverbindung.

Die Oszillationsbewegung des Laserstrahls kann mit hoher Geschwindigkeit durchgeführt werden.

Erfindungsgemäß können die Schweißnahtform, die Durchmischung der Schmelze in dem Verbindungsbereich durch den Laserstrahl und die Gefügeausbildung der Schweißnaht durch die Oszillationsamplitude, die Oszillationsfrequenz, die Laserleistung und die Lineargeschwindigkeit beeinflusst werden.

Die Temperaturverteilung kann dabei zusätzlich durch ein mehrfaches Überfahren des Verbindungsbereichs mit dem Laserstrahl mit unterschiedlichen Parametern beeinflusst werden.

Die erfindungsgemäßen Verfahren sind vollautomatisiert durchführbar.

Die Verfahren zum Zusatzwerkstoff-freien Laserstrahlverschweißen können auch als Verfahren zum stoffschlüssigen Laserstrahlfügen bezeichnet werden.

Gemäß einer ersten Ausführungsform handelt es sich bei dem Halteelement um eine Haltelasche, um einen Flansch, um einen Rohrstutzen oder um ein Zwischenstück. Bei allen solchen Halteelementen ist die Kontaktfläche zu dem Rohrelement üblicherweise geringer als bei entsprechenden angelöteten Halteelementen.

Mit einem Zwischenstück können zwei Rohre miteinander verbunden werden. In diesem Fall ist an beiden Anliegeseiten des Zwischenstücks jeweils ein Rohrelement zu positionieren und damit Zusatzwerkstoff-frei zu verschweißen.

Gemäß einer weiteren Ausführungsform weist die Anliegeseite, mit der das Halteelement an dem Außen-Umfangsbereich des Rohrelements anliegt, eine Höhe von 2 bis 4 mm und eine Breite von 10 bis 30 mm auf.

Mit einer solchen Anliegeseite, die im Vergleich zu Anliegeflächen bei Lötverbindungen sehr klein bemessen ist, kann eine dauerhafte integrale Verbindung mit hoher Festigkeit erreicht werden.

Gemäß dem ersten erfindungsgemäßen Verfahren liegt das Halteelement in einem Stumpfstoß an einem Außenumfangsbereich des Rohrelements an, insbesondere an einem sehr geringen Umfangswinkelbereich von 0,5 - 10° an dem Außenumfangsbereich des Rohrelements,

Ein solches geringflächiges Anliegen reicht erfindungsgemäß für eine dauerhafte integrale Verbindung mit hohen Festigkeitswerten aus.

Gemäß der erfindungsgemäßen Verfahren trifft der fokussierte Laserstrahl seitlich von einer Seite auf den Verbindungsbereich zwischen dem Halteelement und dem Rohrelement bzw. zwischen dem ersten und dem zweiten Rohrelement auf, insbesondere aus einer Tangentialrichtung des Rohrelements an dem Verbindungsbereich bzw. aus einer Tangentialrichtung der beiden Rohrelemente an dem Verbindungsbereich.

Gemäß einer weiteren Ausführungsform der Erfindung beschreibt die Oszillations-Bewegung eine spiralförmige Bewegungsbahn, mit mehreren aufeinanderfolgenden, jeweils in Breitenrichtung aneinander anschließenden, runden, gerundeten, ovalen oder elliptischen Bewegungbahnabschnitten. Die Schweißnaht selbst hat eine gerade Form.

Gemäß einer weiteren Ausführungsform der Erfindung beschreibt die Oszillations-Bewegung eine Zick-Zack-Bewegungsbahn, mit mehreren aufeinanderfolgenden, jeweils in Breitenrichtung aneinander anschließenden, geraden oder leicht gekrümmten Bewegungbahnabschnitten. Die Schweißnaht selbst hat eine gerade Form.

Gemäß einer weiteren Ausführungsform der Erfindung beschreibt die Oszillations-Bewegung eine Achter-Bewegungsbahn, mit mehreren aufeinanderfolgenden, jeweils in Breitenrichtung aneinander anschließenden Bewegungbahnabschnitten in Form von jeweils einer Acht. Die Schweißnaht selbst hat eine gerade Form.

Mit solchen Bewegungsbahnen kann eine zuverlässige integrale Verbindung zwischen Rohr- und Halteelement bzw. den beiden Rohrelementen erreicht werden. Gleichzeitig sind die Porenbildung, die Heißriss- bzw. Erstarrungsrissbildung und die Bildung von Erstarrungskratern deutlich reduziert. Die Schweißnahtgeometrie kann mit solchen Bewegungsbahnen und Schweißnähten optimal an die individuellen Erfordernisse angepasst werden.

Gemäß einer weiteren Ausführungsform wird die Laserstrahlquelle derart betrieben, dass genau eine durchgängige Schweißnaht entsteht. Dadurch wird die Fertigungszeit verkürzt, die Gefahr von Undichtigkeiten ist reduziert und es wird nur eine geringe Energiemenge eingebracht. Voraussetzung hierfür ist selbstverständlich die Zugänglichkeit des Verbindungsbereichs für die Laserstrahlquelle über die gesamte Breite.

Gemäß einer weiteren Ausführungsform umfasst die Laserstrahleinheit einen Festkörperlaser, zwei Umlenkspiegel mit Galvanometermotoren, und eine Planfeldlinse. Die Bewegung des Laserstrahls erfolgt alleine durch die Bewegung der zwei Umlenkspiegel mit Galvanometermotoren. Die Planfeldlinse, kann als F-Theta-Linse ausgebildet sein. Die Linse sorgt dafür, dass sich der Fokus innerhalb des Bearbeitungsfeldes in einer Ebene befindet.

Gemäß einer weiteren Ausführungsform umfasst die Laserstrahleinheit einen Festkörperlaser, eine Optik, bestehend aus einer Kollimations- und einer Fokussierlinse, welche auf einer Linearachse befestigt sind, und eine Strahlablenkeinheit, bestehend aus zwei Umlenkspiegeln mit Galvanometermotoren. Die Bewegung des Laserstrahls erfolgt über die Umlenkspiegel mit Galvanometermotoren. Bei einer 3D Optik wird die Fokussierlinse mit einer Linearachse geführt. Damit wird dafür gesorgt, dass sich der Fokus in einer Ebene befindet, wie bei der F-Theta-Linse. Der Fokus kann aber auch an schräge oder gekrümmte Oberflächen angepasst werden.

Gemäß einer weiteren Ausführungsform umfasst die Laserstrahleinheit einen Festkörperlaser, eine Optik, die insbesondere durch einen Umlenkspiegel mit Galvanometermotor und durch eine Fokussierlinse gebildet ist, und einen Roboter. Die Bewegung des Laserstrahls in Schweißnahtrichtung erfolgt durch Bewegung des Roboters oder Linearachsen, an denen die Fokussieroptik angebracht ist. Die oszillierende Bewegung des Laserstrahls erfolgt durch den Umlenkspiegel mit Galvanometermotor.

Es erfolgt eine Oszillation des fokussierten Strahls gemäß den vorher beschriebenen Bewegungsbahnen.

Mit solchermaßen ausgebildeten Laserstrahleinheiten können die erfindungsgemäßen Verfahren besonders günstig ausgeführt und die erfindungsgemäße Schweißnahtverbindung besonders gut hergestellt werden.

Der Laserstrahl kann dabei mit Hilfe einer hochdynamischen (Galvanometer)-Scanner-Optik, eindimensional, zweidimensional oder dreidimensional oszillierend über den Verbindungsbereich bewegt werden.

Gemäß einer weiteren Ausführungsform weist die Laserstrahlquelle eine hochbrillante Strahlquelle, insbesondere einen Single-Mode-Laser auf. Dies ermöglicht einen großen Arbeitsabstand zwischen der Optik, die auch Fokussierungsoptik genannt werden kann, und den miteinander zu verbindenden Rohr- und Halteelementen bzw. Rohrelementen. Dadurch ist auch ein Schweißen an komplexen Rohrkonstruktionen möglich, z.B. mehrere Rohre mit mehreren Haltern, viele Biegungen u.s.w. Des Weiteren ermöglicht eine solche hochbrillante Strahlquelle eine sehr kleine Auftrefffläche mit kleinem Fokusdurchmesser. Dies trägt zur reduzierten thermischen Schädigung des Werkstoffs, einhergehend mit einer geringeren Festigkeitsabnahme, zu einem geringeren Verzug am Bauteil und zu einem geringeren Energiebedarf bei. Eine solche hochbrillante Strahlquelle erzeugt einen Laserstrahl mit hochbrillanter Strahlqualität.

Gemäß einer weiteren Ausführungsform beträgt der Abstand zwischen der Laserstrahlquelle und dem Verbindungsbereich zwischen dem Halteelement und dem Rohrelement bzw. zwischen dem ersten und dem zweiten Rohrelement 300 - 1600 mm. Dies wird auch als Remote-Schweißen bezeichnet.

Ganz besonders sind die erfindungsgemäßen Verfahren für ein Rohrelement oder zwei Rohrelemente geeignet, das bzw. die dünnwandig ist/sind und insbesondere eine Wandstärke von 0,7 - 2,0 mm und/oder einen Durchmesser von 5,0 - 80,0 mm aufweist/aufweisen. Bei solchen dünnwandigen Rohrelementen wird mit dem erfindungsgemäßen Zusatzwerkstoff-freien Verschweißen sichergestellt, dass der Innenumfang des Rohrelements bzw. der Rohrelemente nicht aufgeschmolzen wird und es ergeben sich große Dichtigkeitsvorteile gegenüber Schweißverfahren mit Zusatzwerkstoff. Am Ende der Naht kann ein Erstarrungskrater entstehen. In dem Erstarrungskrater kann sich bedingt durch Volumenschrumpfung beim Erstarren ein Kanal bilden, der dann bis zum Rohrinnenradius reichen kann. Beim Löten kann dieser kritische Erstarrungskrater nicht entstehen, da nur das Lot geschmolzen wird.

Das Rohrelement und das Halteelement können Aluminium, eine Aluminiumlegierung oder einen rostfreien oder korrosionsbeständigen Stahl aufweisen oder vollständig aus einem dieser Metalle bzw. Legierungen bestehen. Ebenso können das erste und das zweite metallische Rohrelement Aluminium, eine Aluminiumlegierung oder einen rostfreien oder korrosionsbeständigen Stahl aufweisen oder vollständig aus einem dieser Metalle bzw. Legierungen bestehen.

Die Erfindung ist nachfolgend anhand von Ausführungsbeispielen mit Bezug auf die beiliegenden Figuren näher erläutert.
Figur 1 zeigt eine schematische Seitenansicht einer Rohrelement-Halteelement-Anordnung mit einem Rohrelement und mit einem Halteelement, die beide mittels einer Schweißnaht integral miteinander verbunden werden, und eine schematische perspektivische Ansicht einer darüber angeordneten Laserstrahleinheit;
Figur 2 (a) zeigt eine schematische Seitenansicht der Rohrelement-Halteelement-Anordnung aus Figur 1 und eine perspektivische Ansicht einer darüber angeordneten zweiten Laserstrahleinheit;
Figur 2 (b) zeigt eine schematische Seitenansicht der Rohrelement-Halteelement-Anordnung aus Figur 1 und eine perspektivische Ansicht einer darüber angeordneten dritten Laserstrahleinheit;
Figur 3 zeigt anhand ihrer Teilfiguren (a), (b) und (c) die Rohrelement-Halteelement-Anordnung aus den Figuren 1 und 2, bei denen die Bewegungsbahnen des Laserstrahls jeweils mit spiralartigem Verlauf, mit Zickzack-Verlauf und mit Achter-form-Verlauf durchgeführt wird;
Figur 4 zeigt eine schematische Seitenansicht einer Rohrelement-Halteelement-Anordnung mit Blickrichtung auf die offenen Enden der Rohrelemente;
Figur 5 zeigt eine schematische Seitenansicht einer Rohrelement-Halteelement-Anordnung mit Blickrichtung auf die offenen Enden der Rohrelemente;
Figur 6 zeigt ein Foto der Rohrelement-Halteelement-Anordnung aus den Figuren 1 bis 3, schräg von oben; und
Figur 7 zeigt ein Foto einer weiteren Rohrelement-Halteelement-Anordnung, schräg von oben.

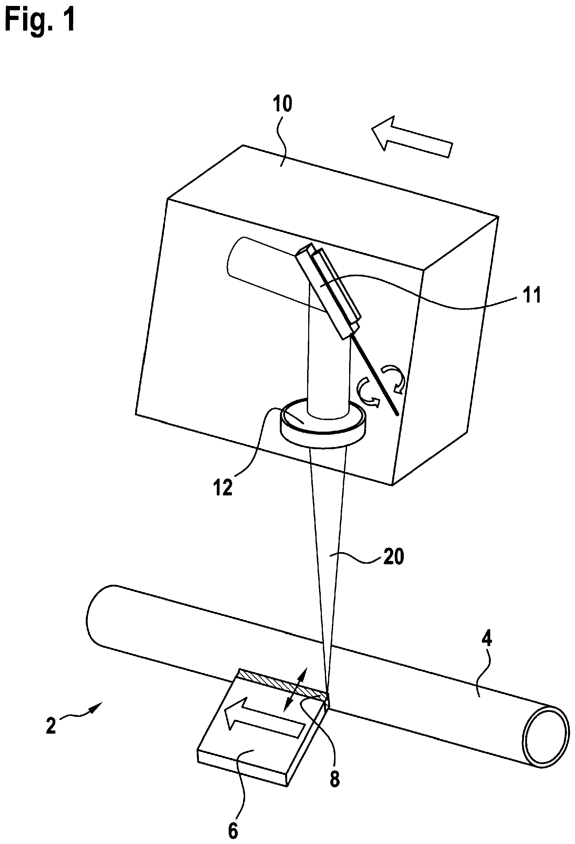

Figur 1 zeigt eine schematische Seitenansicht einer Rohrelement-Halteelement-Anordnung 2 mit einem Rohrelement 4 und mit einem Halteelement 6, die beide mittels einer Schweißnaht 8 integral miteinander verbunden werden, und eine schematische perspektivische Ansicht einer darüber angeordneten Laserstrahleinheit 10.

Die Rohrelement-Halteelement-Anordnung 2 ist dabei in der Seitenansicht von vorne bezogen auf die Symmetrieachse des Rohrelements 4 gezeigt. Die Darstellung in Figur 1 ist nicht maßstabsgetreu.

Hierfür ist eine erste Laserstrahleinheit 10 in schematischer perspektivischer Darstellung oberhalb der Schweißnaht 8 angeordnet. Diese erste Laserstrahleinheit 10 verfügt über einen nicht gezeigten diodengepumpten Festkörperlaser mit Kollimiereinheit, über einen Umlenkspiegel mit Galvanometermotor11 und über eine Fokussierlinse 12.

Bei der ersten Laserstrahleinheit 10 erfolgt die Bewegung der gesamten Laserstrahleinheit 10 entlang der Schweißbahn durch mechanische Achsen oder einen Roboter, die hier nicht gezeigt sind. Diese Bewegungsrichtung ist durch zwei von rechts nach links verlaufende Pfeile angedeutet. Die Oszillation des Laserstrahls erfolgt quer zur Schweißnaht 8, also von Halteelement 6 zu Rohrelement 4 hin und wieder zurück, wie dies durch einen kleinen Pfeil, der sich quer über die Schweißnaht 8 erstreckt, angedeutet ist. Durch den Umlenkspiegel mit Galvanometermotor 11 kann somit ein eindimensionales Pendeln erreicht werden.

Der von dieser ersten Laserstrahleinheit 10 erzeugte Laserstrahl 20 trifft auf den Verbindungsbereich zwischen Halteelement 6 und Rohrelement 4 auf. Dieser Verbindungsbereich wird durch die rechte Anliegeseite des Halteelements 6 und dem linken Außenumfangsbereich des Rohrelements 4, an dem das Halteelement 6 mit seiner Anliegeseite anliegt, gebildet.

Das Halteelement 6 liegt im Stumpfstoß an dem Rohrelement 4 an und hat eine Höhe von 3 mm und eine Breite von 20 mm. Das Rohrelement 4 hat einen Durchmesser von etwa 15 mm und eine Wanddicke von etwa 1 bis 1,5 mm. Der Außenumfangsbereich des Rohrelements, an dem das Halteelement 6 anliegt, beträgt etwa 5°.

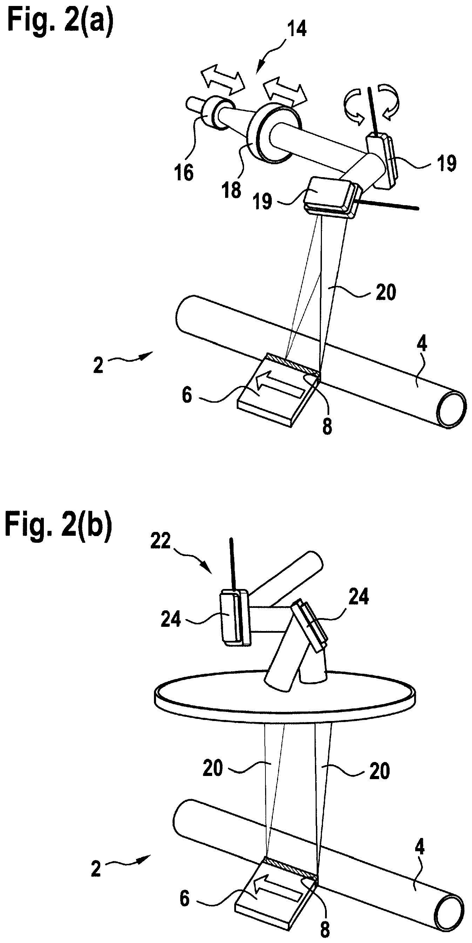

Figur 2 (a) zeigt eine schematische Seitenansicht der Rohrelement-Halteelement-Anordnung 2 aus Figur 1 und eine perspektivische Ansicht einer darüber angeordneten zweiten Laserstrahleinheit 14.

Die zweite Laserstrahleinheit 14 verfügt über einen nicht gezeigten diodengepumpten Festkörperlaser mit Kollimiereinheit, über eine Kollimationslinse 16, über eine Fokussierlinse 18, und über zwei Umlenkspiegel mit Galvanometermotoren 19.

Die Kollimationslinse 16 und die Fokussierlinse 18 sind in und gegen die Richtung des Laserstrahls verfahrbar. Die Umlenkspiegel mit Galvanometer-Motoren 19 sind so angeordnet, dass der Laserstrahl 20 sowohl entlang der Schweißbahn, wie dies durch den rechts nach links verlaufenen Pfeil angedeutet ist, als auch oszillierend quer zur Schweißnaht 8, also von Halteelement 6 zu Rohrelement 4 hin und wieder zurück bewegt werden kann. Die Bewegung des Laserstrahls 20 über die Schweißnahtlänge erfolgt somit durch das Spiegelsystem, das durch die beiden Umlenkspiegel mit Galvanometer-Motoren 19 gebildet wird. Der Fokus wird durch ein bewegliches Linsensystem, das durch die Kollimationslinse 16 und die Fokussierlinse 18 gebildet wird, in einer Ebene gehalten. Der Fokus kann in der Z Achse verfahren werden.

Die erste Rohrelement-Halteelement-Anordnung 2 der Figur 2 entspricht derjenigen in Figur 1 und wird hier nicht noch einmal erläutert.

Figur 2 (b) zeigt eine schematische Seitenansicht der Rohrelement-Halteelement-Anordnung 2 aus Figur 1 und eine perspektivische Ansicht einer darüber angeordneten driten Laserstrahleinheit 22.

Die dritte Laserstrahleinheit 22 verfügt über einen nicht gezeigten diodengepumpten Festkörperlaser mit Kollimiereinheit, über zwei Umlenkspiegel mit Galvanometermotoren 24, und über eine Planfeld F-Theta-Linse 26.

Die Umlenkspiegel mit Galvanometer-Motoren 24 sind so angeordnet, dass der Laserstrahl 20 sowohl entlang der Schweißbahn, wie dies durch den rechts nach links verlaufenen Pfeil angedeutet ist, als auch oszillierend quer zur Schweißnaht 8, also von Halteelement 6 zu Rohrelement 4 hin und wieder zurück bewegt werden kann. Der Fokus wird durch die Planfeld F-Theta-Linse 26 in einer Ebene gehalten.

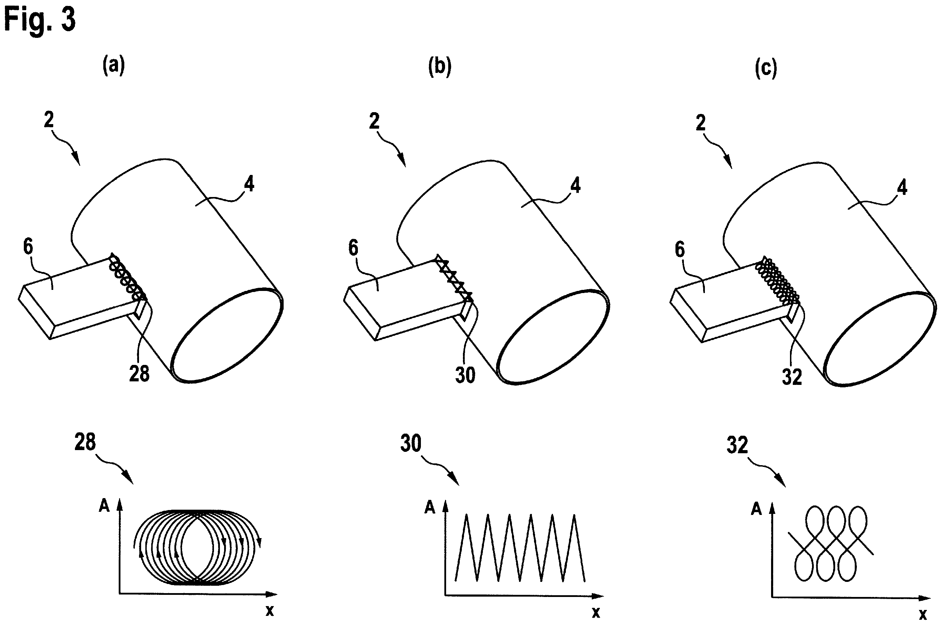

Die erste Rohrelement-Halteelement-Anordnung 2 der Figur 3 entspricht derjenigen in Figur 1 und wird hier nicht noch einmal erläutert.

Figur 3 zeigt anhand ihrer Teilfiguren (a), (b) und (c) die Rohrelement-Halteelement-Anordnung 2 aus den Figuren 1 und 2, bei denen der Verlauf der Bewegungsrichtung des Laserstrahls jeweils mit spiralartigem Verlauf 28, mit Zickzack-Verlauf 30 und mit Achterform-Verlauf 32 dargestellt.

Gemäß Figur 3(a) erstreckt sich die Schweißnaht 28 über die gesamte Breite des Verbindungsbereichs zwischen der rechten Anliegeseite des Halteelements 6 und dem Außenmantelbereich des Rohrelements 4, an dem das Halteelement 6 mit seiner Anliegeseite anliegt.

In der darunter angeordneten Darstellung ist die Oszillationsamplitude A, in einer Draufsicht auf den Verbindungsbereich und in Bewegungsrichtung von links nach rechts gesehen, gut zu erkennen. Es ist ebenfalls gut zu erkennen, dass die Bewegungsrichtung in Breitenrichtung x nach rechts und bezogen auf die runden Schweißnahtabschnitte in Uhrzeigersinn erfolgt. Die Bewegung kann im und entgegen Uhrzeigersinn erfolgen.

Gemäß Figur 3(b) ist die Zickzackform der Bewegungsrichtung des Laserstrahls mit mehreren aufeinander folgenden, in Breitenrichtung aneinander anschließenden geraden Bewegungsabschnitten gut zu erkennen, und ebenso ist in der Bewegungsbahndarstellung darunter die Amplitude A und die Bewegungsrichtung in Breitenrichtung x gut zu erkennen.

In der Darstellung der Figur 3(c) ist der Verlauf der Bewegungsrichtung des Laserstrahls mit Achterform mit mehreren aufeinander folgenden, jeweils in Breitenrichtung aneinander anschließenden Bewegungsbahnabschnitten in Form von jeweils einer Acht gut zu erkennen.

Dabei ist auch gut zu erkennen, dass nach Ausführung einer oberen oder unteren Schlaufe der Laserstrahl mit der gleichen Steigungsrichtung zunächst weiter nach rechts geführt wird, bevor die daran anschließende untere oder obere Schlaufe des Laserstrahls durchgeführt wird.

Bei allen Darstellungen der Figuren 1, 2 und 3 trifft der Laserstrahl auf eine Auftreff-Fläche von 2400 µm² auf dem Verbindungsbereich zwischen Rohrelement 4 und Halteelement 6 auf, wird jeweils entlang der Bewegungsbahn, die in den Bewegungsbahndarstellungen der Figuren 3(a), (b) und (c) dargestellt sind, über die gesamte Breite des Verbindungsbereichs geführt und wird dabei mit einer Laserstrahlenergie betrieben, sodass seine Streckenenergie etwa 50 J/mm beträgt. Dadurch wird der gesamte Verbindungsbereich aufgeschmolzen und somit werden das Halteelement 6 und das Rohrelement 4 über die gesamte Breite und Höhe des Halteelements 6 miteinander Zusatzwerkstoff-frei verschweißt. Der Wert für die Streckenenergie ist nur beispielhaft angegeben. Er hängt von Dicke des Halters, von der gewünschten Nahtbreite, und dem Material ab, und kann z.B. bei anderen Aluminiumsorten, oder bei Stahl ein anderer sein.

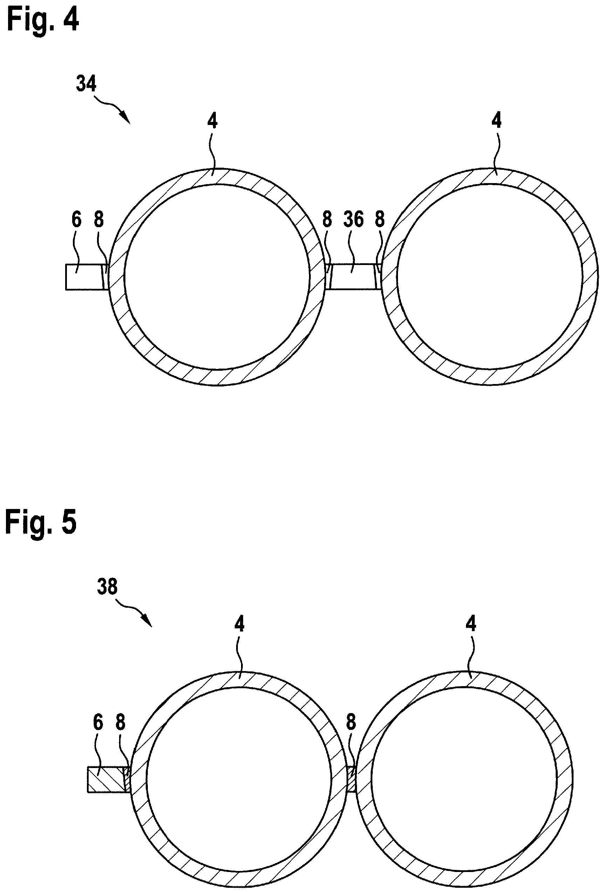

Figur 4 zeigt eine schematische Seitenansicht einer Rohrelement-Halteelement-Anordnung 34 mit Blickrichtung auf die offenen Enden der Rohrelemente 4.

Diese Rohrelement-Halteelement-Anordnung 34 umfasst zwei nebeneinander angeordnete Rohrelemente 4 gleichen Durchmessers, die über ein Zwischenstück 36 integral miteinander verbunden sind, wobei das linke Rohrelement 4 integral mit einem Halteelement 6 verbunden ist. Die Rohrelemente können auch verschiedene Durchmesser haben.

Das Rohrelement 4 und das Halteelement 6 entsprechen dabei dem in den Figuren 1 bis 3 dargestellten und beschriebenen Rohrelement 4 und Halteelement 6. Diese werden daher mit den gleichen Bezugszeichen gekennzeichnet und nicht noch einmal erläutert.

Das Zwischenstück 36 liegt im Stumpfstoß an beiden Rohrelementen 4 an, hat eine Höhe von 3 mm und eine Breite von 20 mm, und ist mittels einer Schweißnaht 8 an seiner linken Anliegeseite integral mit dem linken Rohrelement 4 und mittels einer Schweißnaht 8 an seiner rechten Anliegeseite integral mit dem rechten Rohrelement 4 verbunden.

Figur 5 zeigt eine schematische Seitenansicht einer Rohrelement-Halteelement-Anordnung 38 mit Blickrichtung auf die offenen Enden der Rohrelemente 4.

Die Rohrelement-Halteelement-Anordnung 38 verfügt über zwei nebeneinander angeordnete Rohrelemente 4 gleichen Durchmessers und über ein Halteelement 6, das mit seiner rechten Anliegeseite an dem linken Ende des linken Rohrelements 4 mittels einer Schweißnaht 8 verschweißt ist. Die Rohrelemente können auch verschiedene Durchmesser haben.

Die Rohrelemente 4 und das Halteelement 6 entsprechen den in den Figuren 1 bis 4 dargestellten und beschriebenen Rohrelementen 4 und Halteelementen 6. Sie sind daher mit gleichen Bezugszeichen gekennzeichnet und werden nicht noch einmal erläutert.

Anders als in der Rohrelement-Halteelement-Anordnung 34 aus Figur 4 ist zwischen den beiden Rohrelementen 4 kein Zwischenstück vorgesehen, vielmehr sind diese direkt miteinander verschweißt und zwar mittels einer Schweißnaht 8.

Diese Schweißnaht 8 ist wiederum mittels Zusatzwerkstoff-freiem Verschweißen zwischen den beiden Rohrelementen 4 gebildet worden, unter Verwendung einer der Laserstrahleinheiten 10, 14, 22 aus den Figuren 1 und 2.

Dabei ist der Laserstrahl auf eine Auftrefffläche von 2400 µm² auf den Verbindungsbereich zwischen den beiden Rohrelementen 4 aufgetroffen und in einer Oszillationsbewegung mit einer Oszillationsamplitude von dem ersten zu dem zweiten Rohrelement 4 hin und wieder zurück und mit einer Streckenenergie von 50 J/mm über die gesamte Breite des Verbindungsbereichs zwischen den beiden Rohrelementen 4 bewegt worden.

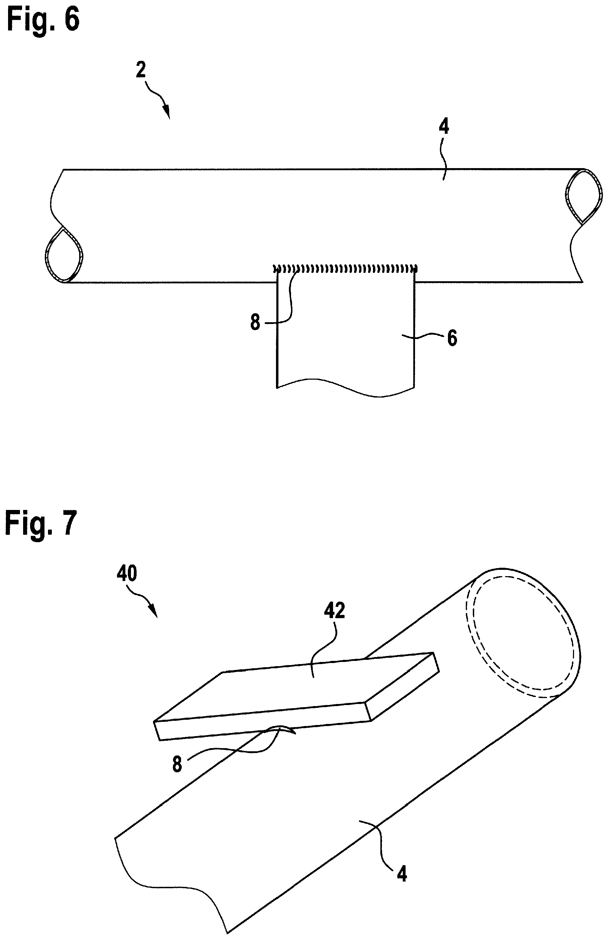

Figur 6 zeigt ein Foto der Rohrelement-Halteelement-Anordnung 2 aus den Figuren 1 bis 3, schräg von oben.

Dabei ist die Breite des Halteelements 6 und die Schweißnaht 8 zwischen Rohrelement 4 und Halteelement 6 gut zu erkennen.

Figur 7 zeigt ein Foto einer Rohrelement-Halteelement-Anordnung 40, schräg von oben.

Dabei ist ein tangential anliegendes Halteelement 42 mittels einer erfindungsgemäßen Schweißnaht 8 an dem Rohrelement 4 integral angebracht worden. Das tangential anliegende Halteelement 42 ist dabei plattenförmig ausgebildet.

### Bezugszeichenliste

- 2: Rohrelement-Halteelement-Anordnung
- 4: Rohrelement
- 6: Halteelement
- 8: Schweißnaht
- 10: erste Laserstrahleinheit
- 11: Umlenkspiegel mit Galvanometermotor
- 12: Fokussierlinse
- 14: zweite Laserstrahleinheit
- 16: Kollimationslinse
- 18: Fokussierlinse
- 19: Umlenkspiegel mit Galvanometermotoren
- 20: Laserstrahl
- 22: dritte Laserstrahleinheit
- 24: Umlenkspiegel mit Galvanometermotoren
- 26: Planfeld F-Theta-Linse
- 28: Bewegungsbahn mit spiralartiger Form
- 30: Bewegungsbahn mit Zick-Zack-Form
- 32: Bewegungsbahn mit Achter-Form
- 34: Rohrelement-Halteelement-Anordnung
- 36: Zwischenstück
- 38: Rohrelement-Halteelement-Anordnung
- 40: Rohrelement-Halteelement-Anordnung
- 42: tangential anliegendes Halteelement

## Patentansprüche

1. Verfahren zum Zusatzwerkstoff-freien Laserstrahl-Verschweißen eines metallischen Rohrelements (4) mit einem metallischen Halteelement (6); aufweisend die folgenden Verfahrensschritte:
Bereitstellen eines Rohrelements (4) und Bereitstellen eines Halteelements (6) für das Rohrelement (4) so, dass das Halteelement (6) mit einer Anliegeseite an einem Außen-Umfangsbereich des Rohrelements (4) anliegt, sodass der Verbindungsbereich zwischen Halteelement (6) und Rohrelement (4) von dem anliegeseitigen Endbereich des Halteelements (6) und dem Außen-Umfangsbereich des Rohrelements (4) an der Anliegeseite gebildet wird;
wobei das Halteelement (6) in einem Stumpfstoß an dem Außen-Umfangsbereich des Rohrelements (4) anliegt, insbesondere an einem Umfangswinkelbereich von 0,5 bis 10° an dem Außen-Umfangsbereich des Rohrelements (4); und
wobei der fokussierte Laserstrahl seitlich von einer Seite auf den Verbindungsbereich zwischen dem Halteelement (6) und dem Rohrelement (4) auftrifft, insbesondere aus einer Tangentialrichtung des Rohrelements (4) an dem Verbindungsbereich;
**gekennzeichnet durch**
Zusatzwerkstoff-freies Verschweißen des Halteelements (6) mit dem Rohrelement (4) unter Betreiben einer Laserstrahlquelle (10, 14, 22) derart,
dass der Laserstrahl (20) auf eine Auftreff-Fläche von 700 - 8000 µm², insbesondere 2000 - 3000 µm² auf den Verbindungsbereich zwischen Rohrelement (4) und Halteelement (6) auftrifft; und
dass eine Relativbewegung des Laserstrahls über einen Großteil der gesamten Breite des Verbindungsbereich erfolgt und dabei der Laserstrahl mittels einer zweidimensionalen Oszillationsbewegung mit einer Streckenenergie von 20 - 100 J/mm über die zum Fügen aufzuschmelzende Zone geführt wird.

2. Verfahren nach Anspruch 1, wobei es sich bei dem Halteelement (6) um eine Haltelasche, um einen Flansch, um einen Rohrstutzen oder um ein Zwischenstück handelt.

3. Verfahren nach Anspruch 1 oder 2,
wobei die Anliegeseite, mit der das Halteelement (6) an dem Außen-Umfangsbereich des Rohrelements (4) anliegt, eine Höhe von 2 bis 4 mm und eine Breite von 10 bis 30 mm aufweist.

4. Verfahren zum Zusatzwerkstoff-freien Laserstrahl-Verschweißen eines ersten metallischen Rohrelements (4) mit einem zweiten metallischen Rohrelement; aufweisend die folgenden Verfahrensschritte:
Bereitstellen eines ersten metallischen Rohrelements (4) und Bereitstellen eines zweiten metallischen Rohrelements (4) so, dass das erste Rohrelement (4) mit einer Anliegeseite an einer Anliegeseite des zweiten Rohrelements (4) anliegt, sodass der Verbindungsbereich zwischen dem ersten und dem zweiten Rohrelement (4) von den Anliegeseiten der beiden Rohrelemente (4) gebildet wird;
wobei der fokussierte Laserstrahl seitlich von einer Seite auf den Verbindungsbereich zwischen dem ersten und dem zweiten Rohrelement (4) auftrifft, insbesondere aus einer Tangentialrichtung der beiden Rohrelemente (4) an dem Verbindungsbereich;
**gekennzeichnet durch** :
Zusatzwerkstoff-freies Verschweißen des ersten Rohrelements (4) mit dem zweiten Rohrelement (4) unter Betreiben einer Laserstrahlquelle (10, 22) derart,
dass der Laserstrahl (20) auf eine Auftreff-Fläche von 700 - 8000 µm², insbesondere 2000 - 3000 µm² auf den Verbindungsbereich zwischen den beiden Rohrelementen auftrifft; und
dass eine Relativbewegung des Laserstrahls über einen Großteil der gesamten Breite des Verbindungsbereich erfolgt und dabei der Laserstrahl mittels einer zweidimensionalen Oszillationsbewegung mit einer Streckenenergie von 20 - 100 J/mm über die zum Fügen aufzuschmelzende Zone geführt wird.

5. Verfahren nach einem der vorhergehenden Ansprüche,
wobei die Oszillations-Bewegung eine spiralförmige Bewegungsbahn beschreibt bzw. die Schweißnaht eine spiralartige Form (28) hat, mit mehreren aufeinanderfolgenden, jeweils in Breitenrichtung aneinander anschließenden, runden, gerundeten, ovalen oder elliptischen Bewegungbahn- bzw. Schweißnahtabschnitten; oder
wobei die Oszillations-Bewegung eine Zick-Zack-Bewegungsbahn beschreibt bzw. die Schweißnaht eine Zick-Zack-Form (30) hat, mit mehreren aufeinanderfolgenden, jeweils in Breitenrichtung aneinander anschließenden, geraden oder leicht gekrümmten Bewegungbahn- bzw. Schweißnahtabschnitten; oder
wobei die Oszillations-Bewegung eine Achter-Bewegungsbahn beschreibt bzw. die Schweißnaht eine Achter-Form (32) hat, mit mehreren aufeinanderfolgenden, jeweils in Breitenrichtung aneinander anschließenden Bewegungbahn- bzw. Schweißnahtabschnitten in Form von jeweils einer Acht.

6. Verfahren nach einem der vorhergehenden Ansprüche,
wobei die Laserstrahlquelle (10, 22) derart betrieben wird, dass genau eine durchgängige Schweißnaht entsteht.

7. Verfahren nach einem der vorhergehenden Ansprüche,
wobei die Laserstrahleinheit (22) einen Festkörperlaser, zwei Umlenkspiegel mit Galvanometermotoren (24), und eine Planfeldlinse (26) umfasst; und wobei die Bewegung des Laserstrahls (20) alleine durch die Bewegung der zwei Umlenkspiegel mit Galvanometermotoren (24) erfolgt; oder
wobei die Laserstrahleinheit (14) einen Festkörperlaser, ein Optikpaket, das aus einer Kollimationslinse (16) und einer Fokussierlinse (18) besteht, eine Strahlablenkeinheit mit zwei Umlenkspiegel mit Galvanometermotoren (19), aufweist; und wobei die Bewegung des Laserstrahls (20) durch Bewegung der Umlenkspiegel mit Galvanometermotoren (19) erfolgt; oder
wobei die Laserstrahleinheit (10) einen Festkörperlaser, eine Optik, die insbesondere durch einen Umlenkspiegel mit Galvanometermotor (11) und durch eine Fokussierlinse (12) gebildet ist, und einen Roboter aufweist; und wobei die Bewegung des Laserstrahls (20) in Schweißnahtrichtung durch Bewegung des Roboters erfolgt und die oszillierende Bewegung des Laserstrahls (20) durch den Umlenkspiegel mit Galvanometermotor (11) erfolgt.

8. Verfahren nach einem der vorhergehenden Ansprüche,
wobei die Laserstrahleinheit (10, 14, 22) eine hochbrillante Strahlquelle, insbesondere einen Single-Mode-Laser aufweist.

9. Verfahren nach einem der vorhergehenden Ansprüche,
wobei der Abstand zwischen der Laserstrahlquelle (10, 22) und Verbindungsbereich zwischen dem Halteelement (6) und dem Rohrelement (4) bzw. zwischen dem ersten und dem zweiten Rohrelement (4) 300 - 1600 mm beträgt.

10. Verfahren nach einem der vorhergehenden Ansprüche,
wobei das Halteelement (6) mit dem Rohrelement (4) bzw. das erste Rohrelement (4) mit dem zweiten Rohrelement (4) mittels genau einer Schweißnaht miteinander verbunden wird.

11. Verfahren nach einem der vorhergehenden Ansprüche,
wobei das Rohrelement (4) und/oder das erste und das zweite Rohrelement (4) eine Wandstärke von 0,7 - 2,0 mm und/oder einen Durchmesser von 5,0 - 80,0 mm aufweist.

12. Verfahren nach einem der vorhergehenden Ansprüche,
wobei das Rohrelement (4) und das Halteelement (6) Aluminium, eine Aluminiumlegierung oder einen rostfreien Stahl aufweisen oder vollständig aus einem dieser Metalle bzw. Legierungen bestehen; oder
wobei das erste und das zweite metallische Rohrelement (4) Aluminium, eine Aluminiumlegierung oder einen rostfreien Stahl aufweisen oder vollständig aus einem dieser Metalle bzw. Legierungen bestehen.

## Claims

1. A method for additive-free laser beam welding of a metallic tube member (4) to a metallic holding member (6); comprising the following steps:
providing a tube member (4) and providing a holding member (6) for the tube member (4) in such a way that the holding member (6) abuts with an abutting side against an outer circumferential area of the tube member (4), so that the connecting area between the holding member (6) and the tube member (4) is constituted by the abutting-side end portion of the holding member (6) and the outer circumferential area of the tube member (4) on the abutting side;
wherein the holding member (6) abuts in a butt joint against the outer circumferential area of the tube member (4), in particular at a circumferential angle range of 0.5 to 10° on the outer circumferential area of the tube member (4); and
wherein the focused laser beam strikes the connecting area between the holding member (6) and the tube member (4) laterally from one side, in particular from a tangential direction of the tube member (4) at the connecting area;
**characterised by**:
additive-free welding of the holding member (6) to the tube member (4) by operating a laser beam source (10, 14, 22) such
that the laser beam (20) strikes an impact area of 700 - 8000 µm², in particular 2000 - 3000 µm², on the connecting area between the tube member (4) and the holding member (6); and
that relative movement of the laser beam takes place over a large part of the entire width of the connecting area while the laser beam is guided over the zone to be melted for joining by means of a two-dimensional oscillating movement with an energy per section of 20 - 100 J/mm.

2. The method according to claim 1,
wherein the holding member (6) is a holding bracket, a flange, a tube socket or an intermediate piece.

3. The method according to claim 1 or 2,
wherein the abutting side with which the holding member (6) abuts against the outer circumferential area of the tube member (4) has a height of 2 to 4 mm and a width of 10 to 30 mm.

4. A method for additive-free laser beam welding of a first metallic tube member (4) to a second metallic tube member (6); comprising the following steps:
providing a first metallic tube member (4) and providing a second metallic tube member (4) in such a way that the first tube member (4) abuts with an abutting side against an abutting side of the second tube member (4), so that the connecting area between the first and second tube members (4) is constituted by the abutting sides of the two tube members (4);
wherein the focused laser beam strikes the connecting area between the first and second tube members (4) laterally from one side, in particular from a tangential direction of the two tube members (4) at the connecting area;
**characterised by**:
additive-free welding of the first tube member (4) to the second tube member (4) by operating a laser beam source (10, 22) such
that the laser beam (20) strikes an impact area of 700 - 8000 µm², in particular 2000 - 3000 µm², on the connecting area between the two tube members (4); and
that relative movement of the laser beam takes place over a large part of the entire width of the connecting area while the laser beam is guided over the zone to be melted for joining by means of a two-dimensional oscillating movement with an energy per section of 20 - 100 J/mm.

5. The method according to any of the preceding claims,
wherein the oscillating movement describes a spiral movement path or the weld seam has a spiral shape (28) with several successive round, rounded, oval or elliptical movement path or weld seam sections adjoining each other in the width direction; or
wherein the oscillating movement describes a zigzag movement path or the weld seam has a zigzag shape (30) with several successive straight or slightly curved movement path or weld seam sections adjoining each other in the width direction; or
wherein the oscillating movement describes a figure-eight movement path or the weld seam has a figure-eight shape (32) with several successive movement path or weld seam sections adjoining each other in the width direction.

6. The method according to any of the preceding claims,
wherein the laser beam source (10, 22) is operated in such a way that precisely one continuous weld seam is produced.

7. The method according to any of the preceding claims,
wherein the laser beam unit (22) comprises a solid-state laser, two deflecting mirrors with galvanometer motors (24), and a plane field lens (26); and wherein the movement of the laser beam (20) takes place solely through the movement of the two deflecting mirrors with galvanometer motors (24); or
wherein the laser beam unit (14) comprises a solid-state laser, an optics package which consists of a collimation lens (16) and a focusing lens (18), a beam deflection unit with two deflecting mirrors with galvanometer motors (19); and wherein the movement of the laser beam (20) takes place by movement of the deflecting mirrors with galvanometer motors (19); or
wherein the laser beam unit (10) comprises a solid-state laser, an optical system which is formed in particular by a deflecting mirror with a galvanometer motor (11) and by a focusing lens (12), and a robot; and wherein the movement of the laser beam (20) in the direction of the weld seam takes place through movement of the robot and the oscillating movement of the laser beam (20) takes place through the deflection mirror with galvanometer motor (11).

8. The method according to any of the preceding claims,
wherein the laser beam unit (10, 14, 22) comprises a high-brilliance beam source, in particular a single-mode laser.

9. The method according to any of the preceding claims,
wherein the distance between the laser beam source (10, 22) and the connecting area between the holding member (6) and the tube member (4) or between the first and second tube members (4) is 300 - 1600 mm.

10. The method according to any of the preceding claims,
wherein the holding member (6) is connected to the tube member (4) or the first tube member (4) is connected to the second tube member (4) by means of precisely one weld seam.

11. The method according to any of the preceding claims,
wherein the tube member (4) and/or the first and second tube members (4) have a wall thickness of 0.7 - 2.0 mm and/or a diameter of 5.0 - 80.0 mm.

12. The method according to any of the preceding claims,
wherein the tube member (4) and the holding member (6) comprise aluminium, an aluminium alloy or a stainless steel or are made entirely of one of these metals or alloys; or
wherein the first and the second metallic tube members (4) comprise aluminium, an aluminium alloy or a stainless steel or are made entirely of one of these metals or alloys.

## Revendications

1. Procédé de soudage au faisceau laser, sans matériau additif, d'un élément tubulaire métallique (4) avec un élément de maintien métallique (6) ; comportant les étapes de procédé suivantes :
mise à disposition d'un élément tubulaire (4) et mise à disposition d'un élément de maintien (6) pour l'élément tubulaire (4) de telle façon que l'élément de maintien (6) est, par un côté d'ajustement, en ajustement contre une zone périphérique extérieure de l'élément tubulaire (4), de telle sorte que la zone de jonction entre l'élément de maintien (6) et l'élément tubulaire (4) est constituée par la zone d'extrémité côté ajustement de l'élément de maintien (6) et par la zone périphérique extérieure de l'élément tubulaire (4) côté ajustement ;
**caractérisé par** :
soudage, sans matériau additif, de l'élément de maintien (6) avec l'élément tubulaire (4) tout en actionnant une source de faisceau laser (10, 14, 22), de telle façon
que le faisceau laser (20) est incident sur une surface d'incidence comprise entre 700 et 8000 µm², en particulier entre 2000 et 3000 µm², sur la zone de jonction entre l'élément tubulaire (4) et l'élément de maintien (6) ; et
qu'un déplacement relatif du faisceau laser (20) a lieu sur une majeure partie de la largeur totale de la zone de jonction et que, en l'occurrence, le faisceau laser est, par un déplacement oscillant bidimensionnel, guidé avec une énergie d'arc comprise entre 20 et 100 J/mm sur la zone à fondre pour l'assemblage ;
cependant que
l'élément de maintien (6) est, en un aboutement, en ajustement contre la zone périphérique extérieure de l'élément tubulaire (4), en particulier contre une zone périphérique angulaire comprise entre 0,5 et 10 % à la zone périphérique extérieure de l'élément tubulaire (4) ; et
cependant que le faisceau laser focalisé est latéralement en incidence depuis un côté sur la zone de jonction entre l'élément de maintien (6) et l'élément tubulaire (4), en particulier depuis une direction tangentielle de l'élément tubulaire (4) à la zone de jonction.

2. Procédé selon la revendication 1,
cependant que l'élément de maintien (6) consiste en une languette de maintien, en une bride, en une tubulure ou en une pièce intermédiaire.

3. Procédé selon la revendication 1 ou 2,
cependant que le côté d'ajustement par lequel l'élément de maintien (6) est en ajustement avec la zone périphérique extérieure de l'élément tubulaire (4) a une hauteur comprise entre 2 et 4 mm et une largeur comprise entre 10 et 30 mm.

4. Procédé de soudage au faisceau laser, sans matériau additif, d'un premier élément tubulaire métallique (4) avec un deuxième élément tubulaire métallique ; comportant les étapes de procédé suivantes :
mise à disposition d'un premier élément tubulaire métallique (4) et mise à disposition d'un deuxième élément tubulaire métallique (4) de telle façon que le premier élément tubulaire (4) est, par un côté d'ajustement, en ajustement contre un côté d'ajustement du deuxième élément tubulaire (4), de telle sorte que la zone de jonction entre le premier et le deuxième élément tubulaire (4) est constituée par les côtés d'ajustement des deux éléments tubulaires (4) ;
**caractérisé par** :
soudage, sans matériau additif, du premier élément tubulaire (4) avec le deuxième élément tubulaire (4) tout en actionnant une source de faisceau laser (10, 22), de telle façon
que le faisceau laser (20) est incident sur une surface d'incidence comprise entre 700 et 8000 µm², en particulier entre 2000 et 3000 µm², sur la zone de jonction entre les deux éléments tubulaires ; et
qu'un déplacement relatif du faisceau laser (20) a lieu sur une majeure partie de la largeur totale de la zone de jonction et que, en l'occurrence, le faisceau laser est, par un déplacement oscillant bidimensionnel, guidé avec une énergie d'arc comprise entre 20 et 100 J/mm sur la zone à fondre pour l'assemblage ;
cependant que
le faisceau laser focalisé est latéralement en incidence depuis un côté sur la zone de jonction entre le premier et le deuxième élément tubulaire (4), en particulier depuis une direction tangentielle des deux éléments tubulaires (4) à la zone de jonction.

5. Procédé selon une des revendications précédentes,
cependant que le déplacement oscillant décrit une trajectoire de déplacement hélicoïdale ou que le cordon de soudure a une forme hélicoïdale (28) ayant plusieurs segments de trajectoire de déplacement ou de cordon de soudure successifs, respectivement adjacents les uns aux autres dans le sens de la largeur, ronds, arrondis, ovales ou elliptiques ; ou
cependant que le déplacement oscillant décrit une trajectoire de déplacement en zigzag ou que le cordon de soudure a une forme en zigzag (30) ayant plusieurs segments de trajectoire de déplacement ou de cordon de soudure successifs, respectivement adjacents les uns aux autres dans le sens de la largeur, droits ou légèrement courbés ; ou
cependant que le déplacement oscillant décrit une trajectoire de déplacement en huit ou que le cordon de soudure a une forme en huit (32) ayant plusieurs segments de trajectoire de déplacement ou de cordon de soudure successifs, respectivement adjacents les uns aux autres dans le sens de la largeur, sous forme de respectivement un huit.

6. Procédé selon une des revendications précédentes,
cependant que la source de faisceau laser (10, 22) est actionnée de telle façon qu'exactement un cordon de soudure ininterrompu est engendré.

7. Procédé selon une des revendications précédentes,
cependant que l'unité de faisceau laser (22) comprend un laser à corps solide, deux miroirs de renvoi avec moteurs galvanomètres (24), et une lentille de F-Thêta (26) ; et cependant que le déplacement du faisceau laser (20) a lieu uniquement par le déplacement des deux miroirs de renvoi avec moteurs galvanomètres (24) ; ou
cependant que l'unité de faisceau laser (14) comprend un laser à corps solide, un pack optique consistant en une lentille de collimation (16) et en une lentille de focalisation (18), une unité de déflecteur de faisceau ayant deux miroirs de renvoi avec moteurs galvanomètres (19) ; et cependant que le déplacement du faisceau laser (20) a lieu par déplacement des miroirs de renvoi avec moteurs galvanomètres (19) ; ou
cependant que l'unité de faisceau laser (10) comprend un laser à corps solide, une optique constituée en particulier par un miroir de renvoi avec moteur galvanomètre (11) et par une lentille de focalisation (12), et un robot ; et cependant que le déplacement du faisceau laser (20) a lieu, dans la direction du cordon de soudure, par déplacement du robot, et que le déplacement oscillant du faisceau laser (20) a lieu par le miroir de renvoi avec moteur galvanomètre (11).

8. Procédé selon une des revendications précédentes,
cependant que l'unité de faisceau laser (10, 14, 22) comporte une source de rayonnement ultra brillante, en particulier un laser de mode unique.

9. Procédé selon une des revendications précédentes,
cependant que l'écart entre la source de rayonnement laser (10, 22) et la zone de jonction entre l'élément de maintien (6) et l'élément tubulaire (4) ou entre le premier et le deuxième élément tubulaire (4) est comprise entre 300 et 1600 mm.

10. Procédé selon une des revendications précédentes,
cependant que l'élément de maintien (6) est joint à l'élément tubulaire (4) ou que le premier élément tubulaire (4) est est joint au deuxième élément tubulaire (4) au moyen d'exactement un cordon de soudure.

11. Procédé selon une des revendications précédentes,
cependant que l'élément tubulaire (4) et/ou le premier et le deuxième élément tubulaire (4) a une épaisseur de paroi comprise entre 0,7 et 2,0 mm et/ou un diamètre compris entre 5,0 et 80,0 mm.

12. Procédé selon une des revendications précédentes,
cependant que l'élément tubulaire (4) et l'élément de maintien (6) comportent de l'aluminium, un alliage d'aluminium ou un métal inoxydable, ou consistent entièrement en un de ces métaux ou alliages ; ou
cependant que le premier et le deuxième élément tubulaire métallique (4) comportent de l'aluminium, un alliage d'aluminium ou un métal inoxydable, ou consistent entièrement en un de ces métaux ou alliages.
